# EUROPEAN PATENT SPECIFICATION

(11) **EP 2 541 111 B1**
(45) Date of publication and mention of the grant of the patent: **31.12.2014**
(21) Application number: 12173154.1
(22) Date of filing: 22.06.2012
(51) Int. Cl.: F16L 1/11, F16K 17/36, F16L 55/10

(54) **Subsidence construction for a gas connection**
Setzungskonstruktion für einen Gasanschluss
Construction de tassement pour connection de gaz

(30) Priority: 29.06.2011 NL 2007022; 08.02.2012 NL 2008260
(43) Date of publication of application: 02.01.2013
(73) Proprietor: Pipelife Nederland B.V., 1601 MA Enkhuizen (NL)
(72) Inventor: Guitoneau, Hans Edward, 1613 DH Grootebroek (NL)
(74) Representative: Nederlandsch Octrooibureau

(56) References cited:
- DE-A1- 3 840 312
- DE-U1- 8 701 437
- JP-A- 6 241 349
- US-A- 4 007 878
- US-A- 4 166 475

## Description

The invention relates to a subsidence construction according to the preamble of claim 1. A subsidence construction of this type is known from GB-A-931266. This known subsidence construction has two pipe pieces which are inserted into the respective ends of a sleeve. The disadvantage of this known subsidence construction is that the pipe pieces have a substantial height difference, as a result of which the pipe piece accommodated in the ground ends up lying fairly deep.

A further subsidence construction is known from JP-A-6241349. This known subsidence construction consists of a bellows-shaped pipe. If the ground in which the gas pipe and the branch pipe are located subsides and settles, these pipes fall in relation to the building. As the building has foundations, it will not normally be subject to subsidences. Due to this phenomenon, tensions can occur in the connection between the gas pipe in the building, which ultimately result in a break in the gas supply. With the aim of preventing the occurrence of a break of this type, a vertically aligned bellows is incorporated into the gas supply. This bellows can become longer under the influence of subsidence differences, in such a way that the occurrence of excessively high tensions and the possibly resulting break must be avoided.

Although subsidence differences can in fact be compensated with a bellows-shaped pipe of this type, it nevertheless has disadvantages. First and foremost, the size of the compensation length thus obtained is limited. A fairly long bellows-shaped pipe would quickly have to be used for relatively substantial subsidences. In addition, the problem may occur that the lengthening of a pipe of this type is also associated with relatively substantial forces, as a result of which unwanted tensions can still occur.

DE-U-8701437 discloses a construction in a pipe which is aimed at limiting the tensile forces in the pipe, e.g. in case the pipe is struck by an earth mover.

The object of the invention is therefore to provide a subsidence construction of the aforementioned type which is suitable for relatively substantial subsidences and wherein the tensions occurring in the pipes can be limited, and wherein the height difference between the pipe pieces is limited. This object is achieved by the characterising features of claim 1.

In the subsidence construction according to the invention, two components which are slidable in relation to one another are used, i.e. the chamber and the pipe piece slidably accommodated therein. The friction between these components can be kept relatively low using a suitable sealing, in such a way that the compensation means can go into action even in the event of small subsidences and low tensions. Furthermore, a considerably large maximum compensation length can be obtained, which, for example, is only slightly less than the total length of the compensation means.

The pipe piece incorporated into the ground can be connected at a relatively high level to the chamber, between the closed end and the open passage thereof. The advantage of an embodiment of this type is furthermore that the transverse dimensions of the compensation means can remain limited, and the unit as a whole can have a slim, elongated shape.

The chamber has a connection provided in the pipe wall thereof, to which the branch pipe piece is connected. Furthermore, according to a simple embodiment, the pipe pieces can each have a circular cross-section. In particular, the pipe pieces can be concentric.

The subsidence construction will normally be oriented in such a way that the chamber and the pipe piece incorporated therein are slidable in a vertical direction in relation to one another. However, this is not necessary, and it is also conceivable to choose an oblique orientation. The chamber is connected to the branch pipe piece and the pipe piece accommodated therein is connected to the connection pipe piece, said pipe piece projecting outwards on the upper side of the chamber.

In an additionally secured design, a valve can be provided via which the chamber is connected to the branch pipe piece. This valve is held under pre-tension pressed towards the closed condition. Furthermore, in this design, a regulating unit is provided which interworks with the inner pipe piece to hold the valve in the opened condition against the pre-tension in a first position of the inner pipe piece inserted relatively far into the chamber, and to release the valve for the closure thereof under the influence of the pre-tension in a position of the inner pipe piece inserted relatively less far into the chamber.

The advantage of this design is that the gas supply to the compensation means is closed off as soon as the subsidences become too great and the inner pipe piece threatens to be drawn too far out of the chamber. If that is the case, the valve closes and the user is alerted by the interruption in the gas supply to the fact that the subsidence construction must be repaired. In this way, it is avoided that, in the event of excessive subsidences, the compensation means becomes defective and gas can flow freely out.

In particular, the regulating unit can have a tracer pin which, in a position of the inner pipe piece inserted relatively far into the chamber, is held pressed against the outside of the pipe piece under the influence of the pre-tension. As soon as the pipe piece is drawn too far out of the chamber, the tracer pin slides away from the surface of the inner pipe piece, after which the valve closes under the influence of the pre-tension.

The valve preferably has a seat directed against the nominal gas flow and a valve body which is connected to the regulating unit, said valve body being transferable against the nominal gas flow in the opened condition and being transferable in the direction of the nominal gas flow in the closed condition.

A further disadvantage of the known subsidence construction is that the bellows-shaped pipe forms a fixed connection between the various pipe pieces. This means that, in an extreme case, with substantial subsidence differences, an unwanted stress on the gas take-off point may still occur. If the bellows-shaped pipe has in fact been subjected to a certain strain, it will behave in the manner of a rigid pipe in such a way that the subsidence of the branch pipe piece may result in tensile force on the connection pipe piece. In this respect also, the subsidence construction according to the invention offers advantages if the inner pipe piece, over at least the part thereof located in the chamber, has only cross-sections with a constant shape and dimensions, in such a way that the pipe piece is slidable completely out of the passage of the chamber.

According to an alternative embodiment, the valve can be incorporated into the chamber. In this case, the pipe piece incorporated into the chamber can be designed with a valve body, while the chamber has a valve seat which is located at the side of the branch pipe piece connected to the chamber which is turned towards the inner end of the pipe piece incorporated into the chamber, in such a way that if the pipe piece incorporated into the chamber slides out of the chamber, the valve body comes to lie against the valve seat.

The cavity of the chamber in which the branch pipe piece emerges is thus closed as soon as the inner pipe piece is pushed over a certain distance out of the chamber. The valve body comes to lie against the valve seat, which, on the one hand, hinders the gas through-flow and on, the other hand, prevents the inner pipe piece from being pushed entirely out of the chamber. Here also, the user therefore receives an indication that the substrate has subsided, because the gas supply stops. Furthermore, a substantially reduced gas supply before this also already forms an indication. The valve concerned in the chamber does not therefore have to be designed in such a way that it blocks the gas supply entirely. A certain choking is also sufficient, although preference is given to a complete closure.

The valve body is preferably located on the inner end of the pipe piece incorporated into the chamber. The valve body and the valve seat may have matching conical shapes. One of the valve body and the valve seat can possibly carry a rubber sealing ring.

The invention will be explained in detail below with reference to an example embodiment shown in the figures.
Figure 1 shows a vertical cross-section through a subsidence construction according to the invention, in an initial condition.
Figure 2 shows a part of the subsidence construction according to Figure 1, before and after the substrate has settled down.
Figure 3 shows a variant with a valve in the opened condition.
Figure 4 shows the variant with a valve in the closed condition.
Figure 5 shows an alternative design with a valve in the opened condition.
Figure 6 shows the alternative design with a valve in the closed condition.

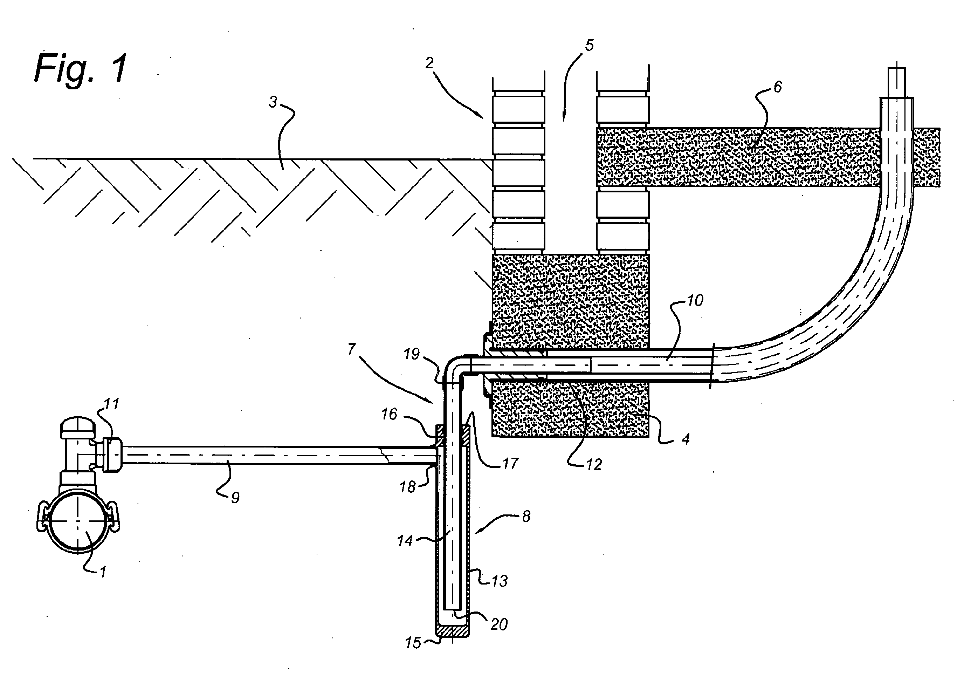

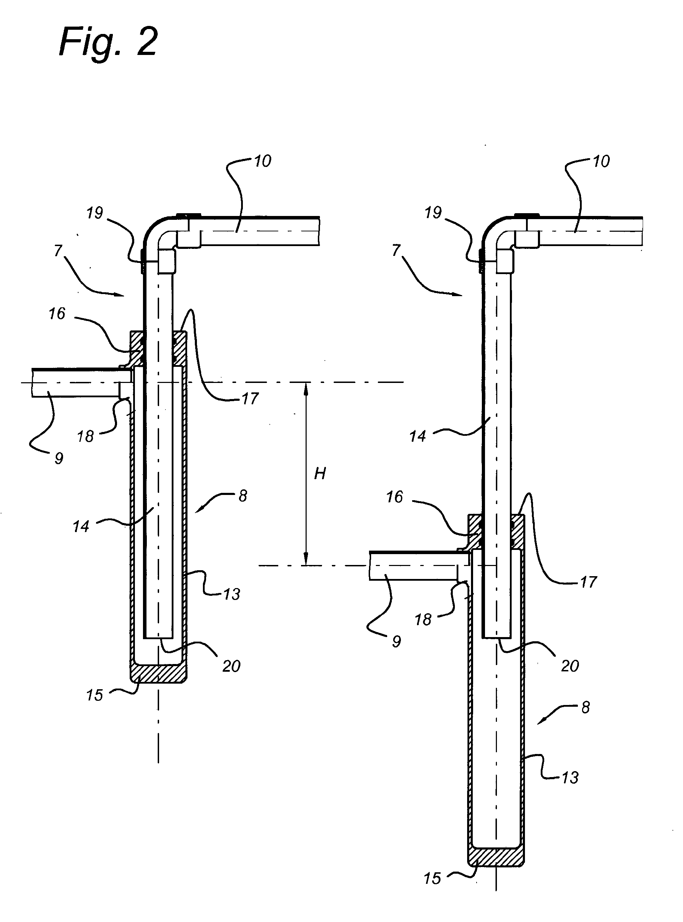

The subsidence construction 7 shown in Figures 1 and 2 is disposed between a main gas pipe 1 and a building 2. The main gas pipe 1 is incorporated into the substrate 3. Of the building 2, only the foundation 4, the lowermost part of the wall 5 and a floor 6 are shown. A gas take-off point, such as a gas meter (not further shown), is located in the building 6.

The subsidence construction 7 consists of the compensation means designated in its entirety by 8, the branch pipe piece 9 and the connection pipe piece 10. The branch pipe piece 9 projects between the attachment 11 connected to the main gas pipe 1 and the compensation means 8, while the connection pipe piece 10 in turn projects between the compensation means 8 and the gas take-off point in the building. For this purpose, a bushing 12 is provided in the foundation, through which the connection pipe piece 10 projects.

The compensation means 8 consists of the inner pipe piece or chamber 13 and the inner pipe piece 14 slidably incorporated therein. The outer pipe piece 13 is provided on the lowermost end with a closing partition 15, while a gastight bushing 16 is provided on the uppermost end. A sealing packing 17, in relation to which the inner pipe piece 14 is slidable in a sealing manner, is located in the bushing 16. The outer pipe piece 13 further comprises a connection fitting 18 to which the branch pipe piece 9 is connected. The inner pipe piece 14 similarly has a connection fitting 19 on the uppermost end, to which the connection pipe piece 10 is connected.

In the initial condition shown in Figure 1, the inner pipe piece 14 is inserted relatively far downwards into the outer pipe piece 13. Gas can flow from the main gas pipe 1, the attachment 11 and the branch pipe piece 9 via the connection fitting 18 into the inner cavity of the outer pipe piece 13. The gas can then flow up via the lowermost open end 20 of the inner pipe piece 14, whereafter it can flow through the connection pipe piece 10 to the gas take-off point.

If subsidences were to occur in the ground 3, the main gas pipe 1 can to some extent fall together with the attachment 11 and the branch pipe piece 9 in relation to the foundation 4 of the building. As a consequence of this subsidence, the chamber or the inner pipe piece 13 of the compensation means 8 can also move downwards. This movement is enabled in that the passage 16 with the sealing packing 17 slides down in relation to the inner pipe piece 14 which is still held in its place due to the connection pipe piece 10 fixed in the bushing 12.

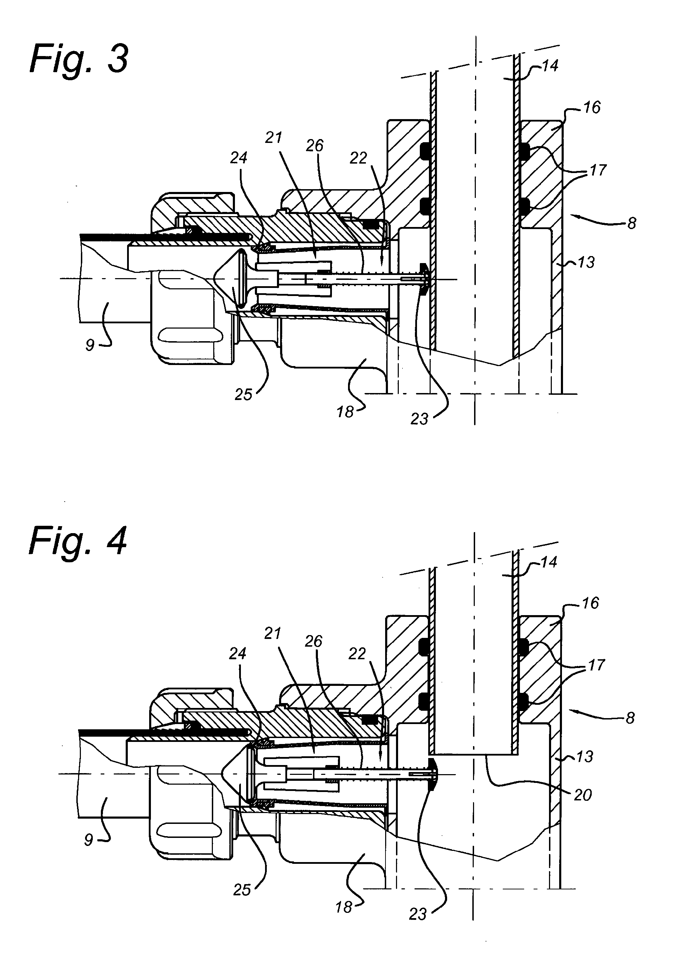

A further variant of the subsidence construction according to the invention is shown in Figures 3 and 4. The connection 18 with which the branch pipe piece 9 is connected to the chamber 13 is provided here with a valve designated in its entirety by 21. This valve 21 has a valve seat 24 which is directed against the flow of the gas through the subsidence construction. A valve body 25 is also provided, which, under the influence of the pre-tension spring 26, is continuously held pressed towards the closed condition.

However, as shown in Figure 3, the valve 21 is held in the opened condition, against the pre-tension force of the spring 26, by the regulating unit 22. This regulating unit 22 is connected on one end to the valve body 25 and, on the opposite end, carries a tracer pin 23 which lies against the outer surface of the inner pipe piece 14. If, as shown in Figure 3, the inner pipe piece 14 is inserted sufficiently far into the chamber 13, the normal gas flow can thus occur via the valve 25. If, however, under the influence of the substantial subsidences, the inner pipe piece 14 threatens to be drawn too far out of the chamber 13, as shown in Figure 4, the tracer pin 23 slides from the outer surface of the inner pipe piece. The valve 21 thus closes directly under the influence of the pre-tension spring 26, in such a way that the further free gas flow is blocked. This is further facilitated in that the valve body 25, is held pressed firmly against the valve seat 24 under the influence of the gas pressure in the branch pipe piece 9.

A warning is thus given to the user through the interruption of the gas supply if the subsidences were to become too great and the compensation means 8 were to become defective in such a way that the gas could freely flow out.

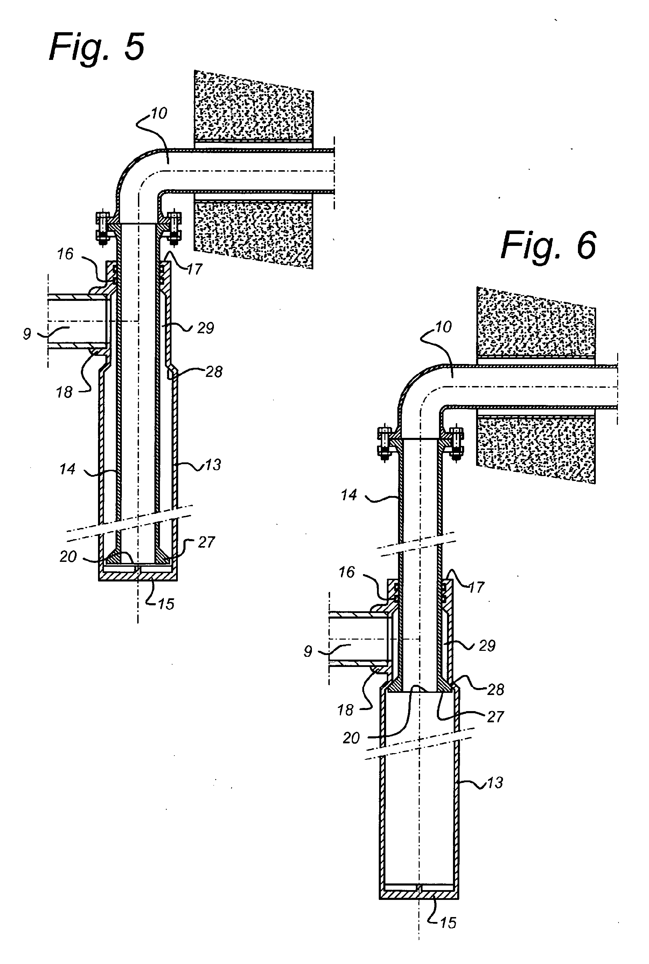

In the alternative embodiment shown in Figures 5 and 6, the valve is entirely accommodated in the chamber 13. The chamber has, on the inner wall thereof, a valve seat 28, which is located under the connection fitting 18 for the branch pipe 9. The inner pipe piece 14 has, on the end 20 thereof, a valve body 27. If, in the event of ground subsidences, the inner pipe piece 14 slides out of the chamber 13, this valve body becomes increasingly closed in the vicinity of the valve seat 28. Ultimately, the valve body comes to rest against the valve seat 28. In this condition, gas can accumulate from the branch pipe 9 into the cavity 29 between the inner pipe piece 14 and the uppermost part of the chamber 13, but the gas can no longer reach the open lowermost end 20 of the inner pipe piece 14. The gas supply is thus interrupted, as result of which the user is warned.

### List of reference numbers

- 1.: Main gas pipe
- 2.: Building
- 3.: Ground
- 4.: Foundation
- 5.: Wall
- 6.: Floor
- 7.: Subsidence construction
- 8.: Compensation means
- 9.: Branch pipe piece
- 10.: Connection pipe piece
- 11.: Attachment
- 12.: Bushing
- 13.: Outer pipe piece
- 14.: Inner pipe piece
- 15.: Sealing partition
- 16.: Passage
- 17.: Sealing packing
- 18.: Connection fitting
- 19.: Connection fitting
- 20.: Open end of inner pipe piece
- 21.: Valve
- 22.: Regulating unit
- 23.: Tracer pin
- 24.: Valve seat
- 25.: Valve body
- 26.: Pre-tension spring
- 27.: Valve body
- 28.: Valve seat
- 29.: Cavity

## Claims

1. Subsidence construction, to be used between a gas take-off point, such as a gas meter, provided in a building (2), and a gas pipe (1) accommodated in a substrate (3), comprising a branch pipe piece (9) to be connected to the gas pipe(1), a connection pipe piece (10) to be fed into the building, and also a compensation means (8) provided between the two pipe pieces (9, 10) with a length that is variable depending on subsidence differences between the substrate and the building, said compensation means (8) comprising a chamber (13) which is connected to the branch pipe piece (9) and also an inner pipe piece (14) of which an inner end (20) is located in the chamber (13) and of which an outer end (19) projects from the chamber (13) inner, said pipe piece (14) being slidable in a sealing manner in relation to the chamber (13) in the longitudinal direction of that inner pipe piece (14) and being connected to the connection pipe piece (10), wherein said chamber (13) of the compensation means (9) has a passage (16) with sealing packing (17) for the inner pipe piece (14) of the compensation means (9) at one end, **characterized in that** in use, the subsidence construction is oriented in such away that the chamber (13) and the inner pipe piece (14) incorporated therein are slidable in a vertical direction in relation to one another, or are obliquely oriented, **in that** said chamber (13) is closed on the other end (15) and has a connection (18) provided in the circumferential wall thereof, to which connection (18) the branch pipe piece (9) is connected, and **in that** the branch pipe piece (9), incorporated into the ground in use, is connected at a relatively high level to the chamber (13), between the closed end (15) and the open passage (16) thereof.

2. Subsidence construction according to Claim 1, wherein the inner pipe piece; and the chamber (13) (14) each have a circular cross-section.

3. Subsidence construction according to one of the preceding claims, wherein the inner pipe piece (14) and the chamber (13) are concentric.

4. Subsidence construction according to one of the preceding claims, wherein the chamber (13) is connected to the branch pipe piece (9) and the inner pipe piece (14) accommodated therein is connected to the connection pipe piece (10), said pipe piece (14) projecting outwards on the upper side of the chamber (16).

5. Subsidence construction according to one of the preceding claims, wherein a valve (21) is provided via which the chamber (13) is connected to the branch pipe piece (9), said valve (21) being held under pre-tension pressed towards the closed position, and a regulating unit (22) which interacts with the inner pipe piece (14) to hold the valve (21) in the opened condition against the pre-tension in a first position of the inner pipe piece (14) inserted relatively far into the chamber (13), and to release the valve (21) for the closure thereof under the influence of the pre-tension in a position of the inner pipe piece (14) inserted relatively less far into the chamber (13).

6. Subsidence construction according to Claim 5, wherein the regulating unit (22) has a tracer pin (23) which, in the position of the inner pipe piece (14) inserted relatively far into the chamber (13), is held pressed against the outside of the pipe piece under the influence of the pre-tension.

7. Subsidence construction according to Claim 5 or 6, wherein the valve (21) has a seat (24) directed against the nominal gas flow and a valve body (25) which is connected to the regulating unit, said valve body being transferable against the nominal gas flow in the opened condition and being transferable in the direction of the nominal gas flow in the closed condition.

8. Subsidence construction according to one of claims 5-7, wherein a pre-tension spring (26) is provided to provide the pre-tension.

9. Subsidence construction according to one of the preceding claims, wherein the inner pipe piece (14), over at least the part thereof located in the chamber (13), has only cross-sections with a constant shape and dimensions, in such a way that the pipe piece (13) is slidable completely out of the passage (16) of the chamber (13).

10. Subsidence construction according to one of claims 1-4, wherein the pipe piece (14) incorporated into the chamber (13) is designed with a valve body (27), and the chamber (13) has a valve seat (28) which is located at the side of the branch pipe piece (9) connected to the chamber (13) which is turned towards the inner end (20) of the pipe piece (14) incorporated into the chamber (13), in such a way that if the pipe piece (14) incorporated into the chamber slides out of the chamber (13), the valve body (27) comes to lie against the valve seat (28).

11. Subsidence construction according to Claim 10, wherein the valve body (27) is located on the inner end (20) of the pipe piece (14) incorporated into the chamber (13).

12. Subsidence construction according to Claim 10 or 11, wherein the valve body (27) and the valve seat (28) have matching conical shapes.

## Patentansprüche

1. Bodensetzungskonstruktion, die zwischen einem Gasentnahmepunkt wie etwa einem Gaszähler, der in einem Gebäude (2) vorgesehen ist, und einem Gasrohr (1), das in einem Bodengrund (3) aufgenommen ist, zu verwenden ist und umfasst: ein Verzweigungsrohrteil (9), das mit dem Gasrohr (1) zu verbinden ist, ein Verbindungsrohrteil (10), das in das Gebäude zu führen ist, und außerdem ein Ausgleichsmittel (8), das zwischen den zwei Rohrteilen (9, 10) vorgesehen ist und eine Länge besitzt, die in Abhängigkeit von Bodensetzungsunterschieden zwischen dem Substrat und dem Gebäude veränderlich ist, wobei das Ausgleichsmittel (8) eine Kammer (13) aufweist, die mit dem Verzweigungsrohrteil (9) verbunden ist und außerdem ein inneres Rohrteil (14) besitzt, wovon sich ein inneres Ende (20) in der Kammer (13) befindet und wovon ein äußeres Ende (19) von der Kammer (13) vorsteht, wobei das innere Rohrteil (14) in seiner Längsrichtung dicht in Bezug auf die Kammer (13) gleiten kann und mit dem Verbindungsrohrteil (10) verbunden ist, wobei die Kammer (13) des Ausgleichsmittels (8) an einem Ende einen Durchlass (16) mit einer Dichtung (17) für das innere Rohrteil (14) des Ausgleichsmittels (9) besitzt, **dadurch gekennzeichnet, dass** im Gebrauch die Bodensetzungskonstruktion in der Weise orientiert ist, dass die Kammer (13) und das innere Rohrteil (14), das darin aufgenommen ist, in einer vertikalen Richtung in Bezug zueinander gleiten können oder schräg orientiert sind, dass die Kammer (13) am anderen Ende (15) verschlossen ist und eine Verbindung (18) besitzt, die in ihrer Umfangswand vorgesehen ist und mit der das Verzweigungsrohrteil (9) verbunden ist, und dass das Verzweigungsrohrteil (9), das im Gebrauch im Boden aufgenommen ist, mit der Kammer (13) zwischen dem geschlossenen Ende (15) und dem offenen Durchlass (16) hiervon auf einem verhältnismäßig hohen Niveau verbunden ist.

2. Bodensetzungskonstruktion nach Anspruch 1, wobei das innere Rohrteil (14) und die Kammer (13) einen kreisförmigen Querschnitt haben.

3. Bodensetzungskonstruktion nach einem der vorhergehenden Ansprüche, wobei das innere Rohrteil (14) und die Kammer (13) konzentrisch sind.

4. Bodensetzungskonstruktion nach einem der vorhergehenden Ansprüche, wobei die Kammer (13) mit dem Verzweigungsrohrteil (9) verbunden ist und das innere Rohrteil (14), das darin aufgenommen ist, mit dem Verbindungsrohrteil (10) verbunden ist, wobei das Rohrteil (14) auf der Oberseite der Kammer (16) nach außen vorsteht.

5. Bodensetzungskonstruktion nach einem der vorhergehenden Ansprüche, wobei ein Ventil (21) vorgesehen ist, über das die Kammer (13) mit dem Verzweigungsrohrteil (9) verbunden ist, wobei das Ventil (9) unter einer Vorbelastung in der geschlossenen Position gehalten wird und eine Regulierungseinheit (22) vorgesehen ist, die mit dem inneren Rohrteil (14) zusammenwirkt, um das Ventil (21) entgegen der Vorbelastung in dem geöffneten Zustand in einer ersten Position des inneren Rohrteils (14), in der es verhältnismäßig weit in die Kammer (13) eingesetzt ist, zu halten und um das Ventil (21) für seine Schließung unter der Wirkung der Vorbelastung in einer Position des inneren Rohrteils (14), in der es verhältnismäßig wenig weit in die Kammer (13) eingesetzt ist, freizugeben.

6. Bodensetzungskonstruktion nach Anspruch 5, wobei die Regulierungseinheit (22) einen Folgerstift (23) besitzt, der in der Position des inneren Rohrteils (14), in der es verhältnismäßig weit in die Kammer (13) eingesetzt ist, unter der Wirkung der Vorbelastung gegen die Außenseite des Rohrteils gepresst gehalten wird.

7. Bodensetzungskonstruktion nach Anspruch 5 oder 6, wobei das Ventil (21) einen Sitz (24) aufweist, der der Nenngasströmung zugewandt ist, und einen Ventilkörper (25) besitzt, der mit der Regulierungseinheit verbunden ist, wobei der Ventilkörper im geöffneten Zustand entgegen der Nenngasströmung verlagerbar ist und im geschlossenen Zustand in Richtung der Nenngasströmung verlagerbar ist.

8. Bodensetzungskonstruktion nach einem der Ansprüche 5-7, wobei eine Vorbelastungsfeder (26) vorgesehen ist, um die Vorbelastung bereitzustellen.

9. Bodensetzungskonstruktion nach einem der vorhergehenden Ansprüche, wobei das innere Rohrteil (14) wenigstens über einem Teil hiervon, der sich in der Kammer (13) befindet, nur Querschnitte mit konstanter Form und mit konstanten Abmessungen besitzt, derart, dass das Rohrteil (13) vollständig aus dem Durchlass (16) der Kammer (13) gleiten kann.

10. Bodensetzungskonstruktion nach einem der Ansprüche 1-4, wobei das Rohrteil (14), das in der Kammer (13) aufgenommen ist, mit einem Ventilkörper (27) entworfen ist und die Kammer (13) einen Ventilsitz (28) besitzt, der sich auf einer Seite des Verzweigungsrohrteils (9), das mit der Kammer (13) verbunden ist, befindet und zu dem inneren Ende (20) des Rohrteils (14), das in der Kammer (13) aufgenommen ist, gerichtet ist, derart, dass dann, wenn das in der Kammer aufgenommene Rohrteil (14) aus der Kammer (13) gleitet, der Ventilkörper (27) an dem Ventilsitz (28) anliegt.

11. Bodensetzungskonstruktion nach Anspruch 10, wobei sich der Ventilkörper (27) am inneren Ende (20) des Rohrteils (14), das in der Kammer (13) aufgenommen ist, befindet.

12. Bodensetzungskonstruktion nach Anspruch 10 oder 11, wobei der Ventilkörper (27) und der Ventilsitz (28) aneinander angepasste konische Formen haben.

## Revendications

1. Construction d'une dénivellation à utiliser entre un point de prélèvement de gaz, tel qu'un compteur à gaz, agencé dans une construction (2), et une canalisation de gaz (1) reçue dans un substrat (3), comprenant une partie de tuyau de ramification (9) à relier à la canalisation de gaz (1), une partie de tuyau de liaison (10) à acheminer dans la construction, et également des moyens de compensation (8) agencés entre les deux parties de tuyau (9, 10) ayant une longueur qui est variable en fonction des différences de dénivellation entre le substrat et la construction, les moyens de compensation (8) comprenant une chambre (13) qui est reliée à la partie de tuyau de ramification (9) et également une partie de tuyau intérieur (14) dont une extrémité intérieure (20) est située dans la chambre (13) et dont une extrémité extérieure (19) fait saillie à partir de la chambre (13), la partie de tuyau intérieur (14) pouvant coulisser d'une manière étanche par rapport à la chambre (13) dans la direction longitudinale de cette partie de tuyau intérieur (14) et étant reliée à la partie de tuyau de liaison (10), dans lequel la chambre (13) des moyens de compensation (8) a un passage (16) ayant une garniture d'étanchéité (17) pour la partie de tuyau intérieur (14) des moyens de compensation (9) à une extrémité, **caractérisée en ce qu'**en utilisation, la construction de dénivellation est orientée de manière telle que la chambre (13) et la partie de tuyau intérieur (14) incorporée dans celle-ci peuvent coulisser dans une direction verticale l'une par rapport à l'autre, ou sont orientées en oblique, **en ce que** la chambre (13) est fermée sur l'autre extrémité (15) et a un raccord (18) agencé dans la paroi circonférentielle de celle-ci, raccord (18) auquel est reliée la partie de tuyau de ramification (9), et **en ce que** la partie de tuyau de ramification (9) incorporée dans le sol est, en utilisation, reliée à un niveau relativement haut à la chambre (13), entre l'extrémité fermée (15) et le passage ouvert (16) de celle-ci.

2. Construction d'une dénivellation selon la revendication 1, dans laquelle la partie de tuyau intérieur (14) et la chambre (13) ont chacune une section transversale circulaire.

3. Construction d'une dénivellation selon l'une quelconque des revendications précédentes, dans laquelle la partie de tuyau intérieur (14) et la chambre (13) sont concentriques.

4. Construction d'une dénivellation selon l'une quelconque des revendications précédentes, dans laquelle la chambre (13) est reliée à la partie de tuyau de ramification (9) et la partie de tuyau intérieur (14) reçue dans celle-ci est reliée à la partie de tuyau de liaison (10), la partie de tuyau (14) faisant saillie à l'extérieur sur le côté supérieur de la chambre (16).

5. Construction d'une dénivellation selon l'une quelconque des revendications précédentes, dans laquelle une soupape (21) est agencée par l'intermédiaire de laquelle la chambre (13) est reliée à la partie de tuyau de ramification (9), la soupape (21) étant maintenue sous pré-tension poussée en direction de la position fermée, et une unité de régulation (22) qui interagit avec la partie de tuyau intérieur (14) pour maintenir la soupape (21) dans l'état ouvert à l'encontre de la pré-tension dans une première position de la partie de tuyau intérieur (14) insérée relativement loin dans la chambre (13), et pour libérer la soupape (21) pour la fermeture de celle-ci sous l'influence de la pré-tension dans une position de la partie de tuyau intérieur (14) insérée relativement moins loin dans la chambre (13).

6. Construction d'une dénivellation selon la revendication 5, dans laquelle l'unité de régulation (22) a un palpeur (23) qui, dans la position de la partie de tuyau intérieur (14) insérée relativement moins loin dans la chambre (13), est maintenu appuyé contre l'extérieur de la partie de tuyau sous l'influence de la pré-tension.

7. Construction d'une dénivellation selon les revendications 5 ou 6, dans laquelle la soupape (21) a un siège (24) dirigé contre l'écoulement de gaz nominal et un corps de soupape (25) qui est relié à l'unité de régulation, le corps de soupape pouvant être transféré à l'encontre de l'écoulement de gaz nominal dans l'état ouvert et pouvant être transféré dans la direction de l'écoulement de gaz nominal dans l'état fermé.

8. Construction d'une dénivellation selon l'une quelconque des revendications 5 à 7, dans laquelle un ressort de pré-tension (26) est agencé pour fournir la pré-tension.

9. Construction d'une dénivellation selon l'une quelconque des revendications précédentes, dans laquelle la partie de tuyau intérieur (14), sur au moins la partie de celui-ci située dans la chambre (13), a seulement des sections transversales ayant une forme et des dimensions constantes, de telle sorte que la partie de tuyau (13) peut coulisser entièrement à l'extérieur du passage (16) de la chambre (13).

10. Construction d'une dénivellation selon l'une quelconque des revendications 1 à 4, dans laquelle la partie de tuyau (14) incorporée dans la chambre (13) est conçue ayant un corps de soupape (27), et la chambre (13) a un siège de soupape (28) qui est situé au niveau du côté de la partie de tuyau de ramification (9) reliée à la chambre (13) qui est tournée vers l'extrémité intérieure (20) de la partie de tuyau (14) incorporée dans la chambre (13), de telle sorte que si la partie de tuyau (14) incorporée dans la chambre coulisse à l'extérieur de la chambre (13), le corps de soupape (27) vient se positionner contre le siège de soupape (28).

11. Construction d'une dénivellation selon la revendication 10, dans laquelle le corps de soupape (27) est situé sur l'extrémité intérieure (20) de la partie de tuyau (14) incorporée dans la chambre (13).

12. Construction d'une dénivellation selon les revendications 10 ou 11, dans laquelle le corps de soupape (27) et le siège de soupape (28) ont des formes coniques complémentaires.
